# EUROPÄISCHE PATENTANMELDUNG

(11) **EP 3 211 550 A1**
(43) Veröffentlichungstag der Anmeldung: **30.08.2017**
(21) Anmeldenummer: 17157695.2
(22) Anmeldetag: 23.02.2017
(51) Int. Cl.: G06F 17/50, B23P 6/00, B23P 6/04, G01B 5/20

(54) **VERFAHREN ZUR HERSTELLUNG EINES 3D-CAD-MODELLS, VERWENDUNG DES 3D-CAD-MODELLS, COMPUTERPROGRAMMPRODUKT UND SYSTEM ZUR NC-BEARBEITUNG**

(30) Priorität: 23.02.2016 DE 102016103118
(71) Anmelder: Fraunhofer-Gesellschaft zur Förderung der angewandten Forschung e.V., 80686 München (DE)
(72) Erfinder: HUWER, Tobias, 52074 Aachen (DE); BOBEK, Thomas, 52074 Aachen (DE)
(74) Vertreter: Naeven, Ralf

(57) **Zusammenfassung**

Ein Verfahren zur Herstellung eines 3D-CAD-Modells eines Bauteils umfasst folgende Schritte: Erfassen von Geometriedaten eines Werkstück-Rohteils (8) und Modifizieren eines eine ursprüngliche Bauteilgeometrie aufweisenden Ursprungs-CAD-Modells (9) zu dem gewünschten 3D-CAD-Modell mit einer modifizierten Bauteilgeometrie, wobei zur Modifikation die Geometriedaten des Werkstück-Rohteils (8) genutzt werden. Das nach dem Verfahren hergestellte 3D-CAD-Modells kann im Rahmen einer Bauteil-Neufertigung oder einer Überarbeitung eines gebrauchten Bauteils für eine CAM-Bearbeitung oder für eine additive Bearbeitung verwendet werden. Darüber hinaus ist auch eine Verwendung für eine Simulation, insbesondere eine Strömungssimulation oder eine Belastungssimulation möglich. Des Weiteren werden ein Computerprogrammprodukt mit zur Durchführung der Schritte des erfindungsgemäßen Verfahrens geeigneten Programmcode-Mitteln vorgeschlagen sowie ein System zur NC-Bearbeitung mit mindestens einem NC-gesteuerten Werkzeug, welches sich durch ein solches Computerprogrammprodukt kennzeichnet.

## Beschreibung

Die Erfindung bezieht sich auf ein Verfahren zur Herstellung eines 3D-CAD-Modells, Verwendungen des 3D-CAD-Modells, ein Computerprogrammprodukt und auf ein System zur NC-Bearbeitung.

Zur Bearbeitung von Werkstücken im Bereich der rechnerunterstützten spanenden Fertigung (CAM, Computer Aided Manufacturing) werden zur Berechnung von Werkzeugbahnen zum einen ein dreidimensionales Ziel-Modell des fertigen Bauteils und zum anderen Informationen zur Geometrie eines Werkstück-Rohteils benötigt. Das Ziel-Modell wird mit Hilfe des rechnerunterstützten Designs (CAD, Computer Aided Design) erstellt und wird im Folgenden als Nominal-CAD-Modell bezeichnet.

Die Erfindung betrifft die Neufertigung eines Bauteils ebenso wie die Überarbeitung eines gebrauchten Bauteils, z.B. zum Zwecke der Reparatur oder für Überholungsmaßnahmen.

Bei der parametrisch-assoziativen Konstruktion für eine Neufertigung, insbesondere bei einer komplexen Bauteil-Geometrie, entsteht ein Konstruktionsbaum. Der Konstruktionsbaum beschreibt die verwendeten Funktionen, wie einzelne Konstruktionsschritte aufeinander aufbauen und welche Hilfsgeometrien erstellt wurden. Für die weitere Bearbeitung ist der Konstruktionsbaum wesentlich, z.B. weil funktional zusammenhängende Komponenten des Bauteils erkannt und geometrische Beziehungen zwischen verschiedenen Komponenten ausgedrückt werden können.

Zunehmend werden zur Reduktion von Werkstoffkosten und um Bearbeitungszeiten zu minimieren für die Neufertigung Werkstück-Rohteile zur Verfügung gestellt, welche nur ein geringes Aufmaß aufweisen (Near-Net-Shape-Produktion). Die Werkstück-Rohteile werden z.B. durch Urform- oder Umformverfahren hergestellt. Um die Geometrie des Werkstück-Rohteils der Berechnung der Werkzeugbahn zur Verfügung stellen zu können, wird diese in der Regel vermessen. Die geometrischen Daten werden z.B. als STL-Datei für die Berechnung der Werkzeugbahn zur Verfügung gestellt.

Bei der CAM-basierten Überarbeitung ist das Werkstück-Rohteil in der Regel ein Bauteil, welches bereits im Einsatz war und hierdurch Veränderungen, z.B. Risse, Löcher, Eindellungen oder Verformungen erfahren hat. Die Geometrie des Werkstück-Rohteils kann ein erstes Mal vermessen werden, um die ermittelte Geometrie dem weiteren Reparaturprozess als Information zur Verfügung zu stellen. In der Regel muss am zu überarbeitenden Bauteil Material neu aufgebaut werden, z. B. durch Laser-Auftragsschweißen. Hiernach ist das Bauteil spanend zu bearbeiten, um zur gewünschten Zielgeometrie zu kommen. Das mit neuem Material versehene aber noch nicht spanend bearbeitete Bauteil wird erneut vermessen, um die Geometriedaten für die Erstellung einer Werkzeugbahn zur Verfügung zu stellen. Eine solche Vorgehensweise ist z. B. aus dem Artikel "An integrated adaptive repair solution for complex aero space components through geometry re-construction" von Jian Gao et al (International Journal of Advanced Manufacturing Technology (2008) 36: 1170-1179, Springer Verlag) für die Reparatur von strömungsleitenden Turbinenblättern von Flugzeugmotoren bekannt. In diesem Artikel ist beschrieben, wie aus der gemessenen Geometrie des zu überarbeitenden Werkstückes ein 3D-CAD-Modell für die CAM-Bearbeitung erstellt werden kann. Dieser Artikel weist darauf hin, dass das ursprüngliche 3D-CAD-Modell, welches seinerzeit zur Neuerstellung des Werkstückes vom Designer entwickelt worden ist, nicht für die Werkzeugbahnerzeugung herangezogen werden könne, da sich die Geometrie dieses ursprünglichen 3D-CAD-Modells von der des bereits im Dienst gewesenen Bauteils unterscheidet. Aufgrund dessen wird im Wege des "Reverse Engineering" die gemessene Geometrie des gebrauchten Bauteils genutzt, um daraus ein nominales 3D-CAD-Modell mit gegenüber der Ursprungsgeometrie geänderter Zielgeometrie zu erstellen.

Bei der automatischen Erfassung von Werkstückgeometrien werden in der Regel STL-Daten erzeugt. Diese haben jedoch den Nachteil, dass die Herstellung hochwertiger Werkzeugbahnen auf dieser Basis problematisch ist. So wird ohne weitere Maßnahmen die für STL-Daten gegebene Facettierung auf die CAM-Bahnen übertragen. Außerdem können STL-Datensätze oftmals die für die CAM-Planung notwendigen Qualitätskriterien auch wegen Artefakten oder Löchern in den erzeugten Geometrien nicht erfüllen. Zudem benötigen STL-Daten eine erhebliche Menge an Speicherkapazität, so dass die Datengröße ein wirtschaftliches Arbeiten mit einer Workstation verhindern kann.

Das Reverse Engineering hat den grundsätzlichen Nachteil, dass der dabei entstehende Konstruktionsbaum nicht dem ursprünglichen des nominalen 3D-CAD-Modells entspricht. Das Reverse Engineering bringt einen geänderten Aufbau mit sich, der nicht parametrisch und assoziativ ist. Die neue Geometrie ist zunächst ein aus einzelnen Kurven definiertes Kantenmodell, welches zum Aufbau der Oberflächen dient, deren Geometrie die vorgenannten Nachteile aufweist. Dahingegen erlaubt das Ursprungs-CAD-Modell die nachträgliche Durchführung von Modifikationen der Teilflächen der Geometrie, bei denen stetige Flächenübergänge erhalten bleiben. Zusätzlich sind beim Reverse Engineering die verwendeten Konstruktionsfunktionen andere als die bei dem ursprünglichen Geometrieaufbau verwendeten, was zu weiteren Abweichungen führen kann.

Das Reverse Engineering kann auch nicht die im Konstruktionsbaum des Ursprungs-CAD-Modell vorhandenen wichtigen Informationen über funktional zusammenhängende Komponenten des Werkstückes und den gegebenen geometrischen Beziehungen zwischen den Komponenten liefern.

Auch aus dem Artikel von Wu B, et al., "Adaptive location of repaired blade for multiaxis milling" (Journal of Computational Designed Engineering (2015), http://dx.doi.org/10.1016/j.jcde.2015.06.009), ist es bekannt, zu Reparaturzwecken eine Turbinenschaufel, bei der verschlissene Bestandteile mittels Laserauftragsschweißen mit neuem Werkstoff versehen wurden, adaptiv mittels Reverse Engineering zu bearbeiten.

Die US 6,661,930 B1, welche ebenfalls ein CAM-basiertes Bearbeitungsverfahren betrifft, setzt sich mit der Problematik auseinander, ein CAD-Modell eines Bauteils, insbesondere eines Turbinenblattes, in das 3D-CAD-Modell einer Werkstückaufnahme einzusetzen. Zunächst werden jeweils ein 3D-CAD-Modell des Bauteils sowie eines der Werkstück-Aufnahme hergestellt. Die Werkstück-Aufnahme wird gegenständlich produziert und in eine Koordinaten-Messmaschine eingesetzt. Ort und Größe der für den Kontakt mit dem Werkstück vorgesehenen Kontaktbereiche werden ermittelt. Aus den daraus gewonnenen Messdaten wird dann ein 3D-CAD-Modell der Kontaktbereiche erstellt. Das 3D-CAD-Modell der Kontaktbereiche wird mit dem 3D-CAD-Modell des Bauteils im selben neuen 3D-CAD-Modell vereinigt. Die Werkstück-Aufnahme ist in diesem Modell in der Position, die sie in der NC-Maschine hat, während das 3D-Cad-Modell des Bauteils noch seine ursprüngliche Position der Design-Erzeugung hat. Anschließend wird der Einsetz-Prozess vorbereitet, wofür Abstände zwischen den Kontaktbereichen der Werkstück-Aufnahme und des Bauteils festgestellt werden. Im Fall der Überlappung des 3D-CAD-Modells des Bauteils mit dem 3D-Cad-Modell der Kontaktbereiche sieht das Verfahren vor, ein "Inset"-Modell der Kontaktbereichgeometrien, z.B. durch Verkleinern des Modells, zu erstellen, welches eine deplatzierte Oberfläche aufweist, die dann nicht mehr mit dem Bauteilmodell überlappt. Anschließend wird der relevante Abstand zwischen Berührungspunkten der beiden 3D-CAD-Modelle berechnet, so dass mittels der aus der vorherigen Operation zur Herstellung des "Inset"-Modells bekannten Daten und der Abstandsinformationen eine Transformationsmatrix zum Einsetzen des Werkstückmodells in die Werkstückaufnahme berechnet werden kann. Somit findet in der Regel eine aus Rotation und Translation kombinierte numerische Bewegung statt, um zwei CAD-Modelle numerisch ineinander zu fügen. Die adaptive Bearbeitung von Bauteilen, insbesondere zu Reparaturzwecken, ist nicht angesprochen.

Der hier betroffenen Erfindung liegt das technische Problem zugrunde, ein alternatives Verfahren zur Herstellung eines 3D-CAD-Modells eines Bauteils zur Verfügung zu stellen, welches automatisierbar die Erstellung hochwertiger Werkzeugbahnen ermöglicht. Das neue Verfahren soll zudem vorteilhafte Verwendungen des 3D-CAD-Modells ermöglichen und mittels eines entsprechend angepassten Computerprogrammprodukts in einem System zur numerisch gesteuerten Bearbeitung (NC-Bearbeitung) mit mindestens einem NC-gesteuerten Werkzeug einsetzbar sein.

Diese Aufgabe wird mit den Merkmalen des Anspruchs 1 gelöst. Somit ist vorgesehen, zur Herstellung des 3D-CAD-Modells eines Bauteils die Geometriedaten eines Werkstück-Rohteils zu erfassen und ein Ursprungs-CAD-Modell, welche eine ursprüngliche Bauteilgeometrie aufweist, zu dem gewünschten 3D-CAD-Modell mit einer modifizierten Bauteilgeometrie zu modifizieren. Bei der Modifikation werden die Geometriedaten des Werkstück-Rohteils genutzt.

Grundlegend anders als im Stand der Technik wird somit für die Erzeugung des gewünschten 3D-CAD-Modells das nominale Ursprungs-CAD-Modell herangezogen, welches eine ursprünglich gewünschte Bauteilgeometrie umfasst, die aber aufgrund der Struktur des Werkstück-Rohteils nicht mehr vollständig realisiert werden kann. Dadurch bleibt die CAD-Datenqualität, welche bereits das Ursprungs-CAD-Modell aufwies, erhalten. Das Ursprungs-CAD-Modell wird vorzugsweise lediglich in einem definierbaren Toleranzbereich angepasst. Im Übrigen basiert es nach wie vor auf der Originalkonstruktionsmethode. Das zugrundeliegende 3D-CAD-Modell wird auf diese Weise quasi um eine Zeitachse erweitert, so dass die Bezeichnung als 4D-CAD-Modell gerechtfertigt ist.

Das nominale Ursprungs-CAD-Modell oder auch Nominal-CAD beschreibt die ursprüngliche Bauteilgeometrie im CAD, wie sie von der Produktentwicklung ursprünglich erstellt wurde, um die geforderte Bauteilfunktion zu erfüllen. Beispielsweise basierend auf den Daten des Designs und der Strukturmechanik wird ein 3D-CAD-Modell, das sogenannte Nominal-CAD, mit Hilfe eines CAD-Systems konstruiert. Demgegenüber bildet das Werkstück-Rohteil die Form der Ausgangsgeometrie, aus dem die Bauteilgeometrie zu fertigen ist. Da Fertigungsprozesse Fertigungstoleranzen unterliegen, ist es jedoch nicht möglich, eine Bauteilgeometrie ohne geometrische Abweichungen herzustellen. Dies betrifft sowohl die Verfahren zur Herstellung des Werkstück-Rohteils als auch die Verfahren zur Fertigstellung der Bauteilgeometrie. Aus diesem Grund werden Toleranzen z.B. nach DIN ISO 2768-1 oder DIN EN ISO 1101 vergeben, um die Fertigungstoleranzen zu berücksichtigen und dennoch die Bauteilfunktion gewährleisten zu können.

Diese Toleranzen können geometrische Abweichungen zulassen, die bei einem Übereinanderlegen des Ursprungs-CAD-Modells (Nominal-CAD) und einem digitalen Abbild (z.B. STL) des Werkstück-Rohteils dazu führen, dass das Werkstück-Rohteil das Ursprungs-CAD-Modell nicht vollständig abdeckt oder umschließt. Dies bedeutet, dass ohne weitere Maßnahmen an den nicht abgedeckten bzw. umschlossenen Stellen ein Materialabtrag nicht stattfinden kann, da Untermaß vorliegt.

Durch die erfindungsgemäße Modifizierung, d.h. Anpassung, des Ursprungs-CAD-Modells kann erreicht werden, dass das gewünschte angepasste 3D-CAD-Modell vollständig vom Werkstoff des Werkstück-Rohteils abgedeckt oder umschlossen ist und das Bauteil mit gegenüber der ursprünglichen Bauteilgeometrie modifizierter Bauteilgeometrie gefertigt werden kann.

Das Werkstück-Rohteil wird verstanden als das Werkstück-Rohteil, wie es vor der Bearbeitung in seiner Ist-Geometrie vorliegt. Bei einer Neuherstellung eines Bauteils entsteht das Werkstück-Rohteil durch einen Herstellungsprozess, der ebenfalls mit Fertigungstoleranzen verbunden ist, die in der Regel deutlich größer sind als die Toleranzen bei der Endverarbeitung, weshalb es zu den oben beschriebenen Problemen beim Übereinanderlegen von Ursprungs-CAD-Modell und Werkstück-Rohteil kommen kann.

Im Falle einer Reparatur eines gebrauchten Bauteils steht das Werkstück-Rohteil für das gebrauchte Bauteil mit seiner tatsächlichen Bauteilgeometrie, die aufgrund von zum Beispiel Verschleiß unvollständig ist. In diesem Fall kann das Ursprungs-CAD-Modell ebenfalls so zum gewünschten 3D-CAD-Modell modifiziert werden, dass das gewünschte 3D-CAD-Modell für die Bearbeitung genutzt werden kann und vorzugsweise exakt der tatsächlichen Bauteilgeometrie des Werkstück-Rohteils - abgesehen von den zu bearbeitenden Verschleißstellen - entspricht.

Im Falle der Reparatur kann das Werkstück-Rohteil auch ein mit additiven Methoden ergänztes gebrauchtes Bauteil sein.

Besonders vorteilhaft ist, dass das Ursprungs-CAD-Modell den vollständigen Konstruktionsbaum mit den damit einhergehenden Informationen umfasst, welcher nach der durchgeführten Modifikation im neuen 3D-CAD-Modell weiter enthalten und angepasst weitergeführt ist. Das aufwändige Herausarbeiten eines vollständig neuen 3D-CAD-Modells aus den Geometrie-Daten der Vermessung des Werkstück-Rohteils gemäß dem Stand der Technik wird vermieden.

Die Geometriedaten des Werkstück-Rohteils dienen lediglich noch dazu, die notwendigen Geometrieinformationen für die Modifikation des Ursprungs-CAD-Modells bereitzustellen. Hierfür kann die gemessene Geometrie des Werkstück-Rohteils, welche z.B. durch eine Punktwolke aus Messdaten beschrieben ist, importiert werden. Daraufhin aktualisiert sich das gesamte dreidimensionale 3D-CAD-Modell des Bauteils. Mit dieser Maßnahme wird das Ursprungs-CAD-Modell mithin auf die gemessene Geometrie des Werkstück-Rohlings adaptiert und steht mit all seinen Vorteilen und Qualitäten der Planung der Werkzeugbahn zur Verfügung.

Das erfindungsgemäße Verfahren kann auch so ausgeführt werden, dass im modifizierten 3D-CAD-Modell die Modifikation dokumentiert wird. Somit wird eine Dokumentation eingerichtet, welche es erlaubt, durchgeführte Modifikationen nachzuvollziehen. Angesichts der hohen Sicherheitsstandards und des damit verbundenen hohen Dokumentationsaufwands ist diese Art der automatisierbaren Dokumentation vorteilhaft.

Es kann vorteilhaft sein, Toleranzbereiche vorzusehen, welche für die Abweichungen zwischen der Geometrie des Werkstück-Rohteils und der Zielgeometrie des Bauteils Grenzen vorgeben, außerhalb derer die Modifikation des Ursprungs-CAD-Modells nicht mehr sinnvoll erscheint, sei es aus fertigungstechnischen oder aus wirtschaftlichen Gründen. Die Toleranzbereiche können je nach Anwendung, z.B. Fertigungs- oder Überarbeitungsverfahren, variiert werden. So kann z.B. eine zerspanende Fertigung wesentlich höhere Ansprüche an die Fertigungsgenauigkeit mit sich bringen als eine additive Fertigung, z.B. durch einen 3D-Druck-Prozess. Der Toleranzbereich kann zudem technische Randbedingungen, wie z.B. fertigungstechnische Aspekte oder die gewünschten Eigenschaften des fertigen Bauteils, z.B. Strömungseigenschaften, berücksichtigen. Ein Toleranzbereich kann als Aufmaß und/oder Mindermaß um die ursprüngliche Bauteilgeometrie herum definiert werden. Dabei kann das Aufmaß und/oder Mindermaß entlang der Bauteilflächen variieren.

Bevorzugt erfolgt das Modifizieren automatisiert mittels elektronischer Datenverarbeitung. Die Notwendigkeit eines menschlichen Eingreifens kann so weitgehend oder vollständig vermieden werden.

Das erfindungsgemäße Verfahren kann auch so ausgeführt werden, dass das Modifizieren mittels einer Transformation der Bauteilgeometrie des Ursprungs-CAD-Modells erfolgt, wobei die Transformation Translation, Rotation, Scherung, Skalierung und/oder nichtlineare Verformung umfasst.

Das nach dem erfindungsgemäßen Verfahren hergestellte 3D-CAD-Modell kann für eine CAM-Bearbeitung verwendet werden, wobei eine Werkzeugbahn auf Grundlage der erfassten Geometriedaten des Werkstück-Rohteils sowie der modifizierten Bauteilgeometrie geplant wird. Die Verwendung ist nicht auf bestimmte Fertigungsverfahren beschränkt. Vorteilhaft kann das erfindungsgemäße Verfahren insbesondere bei spanender Bearbeitung eingesetzt werden. Des Weiteren kann aber auch der Einsatz in der additiven Fertigung oder Bearbeitung vorteilhaft sein, da auch bei der Planung von Werkzeugbahnen für die additive Bearbeitung Abweichungen in der Geometrie des Werkstück-Rohteils von einer ursprünglichen Bauteilgeometrie berücksichtigt werden müssen.

Das erfindungsgemäße Verfahren kann vorteilhaft zur Neufertigung eines Werkstückes verwendet werden. Für die Neufertigung ist das Werkstück-Rohteil ein Rohteil, welches z. B. durch Umformung oder Urformung mit einem geringen Aufmaß gegenüber dem fertigen Werkstück hergestellt wurde. Eine solche Near-Net-Shape-Produktion birgt stets die Gefahr in sich, dass das Werkstück-Rohteil unvollkommen ist und aufgrund dessen eine Anpassung des nominalen Ursprungs-CAD-Modells notwendig wird.

Das erfindungsgemäße Verfahren kann auch zur Überarbeitung, insbesondere zur Reparatur, eines gebrauchten Bauteils eingesetzt werden. In diesem Fall handelt es sich bei dem Werkstück-Rohteil um ein Bauteil, welches bereits aufgrund eines Einsatzes Schäden und/oder Formänderungen erfahren hat. Für die spanende Überarbeitung kann das Werkstück-Rohteil bereits mit neuem Material, z.B. zum Schließen von Lücken oder Rissen oder zum Ersatz von fehlenden Bestandteilen, versehen sein. Das neue Material kann mit den bekannt gängigen Verfahren, z. B. Laserauftragsschweißen, aufgebracht worden sein.

Das erfindungsgemäße Verfahren kann insbesondere vorteilhaft im Zusammenhang mit strömungsleitenden Elementen eines Bauteils, insbesondere eines Rotor- oder Statorblattes einer Turbine, verwendet werden.

Das erfindungsgemäß hergestellte 3D-CAD-Modell kann auch für strömungstechnische Untersuchungen eingesetzt werden, wodurch Schlussfolgerungen über das spätere Einsatzverhalten getroffen werden können.

Weiterhin kann das erfindungsgemäß hergestellte 3D-CAD-Modell auch zu Dokumentationszwecken eingesetzt werden, z.B. um den geometrischen Zustand des Bauteils zu einem bestimmten Zeitpunkt festzuhalten.

Ein Computerprogrammprodukt, z.B. eine Software, umfassend Programmcode-Mittel geeignet zur Durchführung der Schritte des erfindungsgemäßen Verfahrens, kann vorteilhaft auf einer Recheneinrichtung ausgeführt werden.

Insbesondere ein System zur NC-Bearbeitung mit mindestens einem NC-gesteuerten Werkzeug kann ein solches Computerprogrammprodukt aufweisen. Mit einem solchen System können die Herstellung des 3D-CAD-Modells und die anschließende Bearbeitung des Werkstücks automatisch durchgeführt werden.

Im Folgenden werden das erfindungsgemäße Verfahren sowie eine Verwendung des Verfahrens zur Reparatur einer Turbinenschaufel dargestellt.

Es zeigt schematisch
- Fig. 1:: eine Turbinenschaufel,
- Fig. 2:: Schäden an einer Spitze einer Turbinenschaufel,
- Fig. 3:: Schäden an den Kanten der Turbinenschaufel,
- Fig. 4:: seitliche Ansicht der ursprünglichen Form der Turbinenschaufel,
- Fig. 5:: Seitenansicht einer gekrümmten Turbinenschaufel,
- Fig. 6.: Vergleich von Werkstück-Rohteil und Nominal-Modell einer Turbinenschaufel,
- Fig. 7:: Vergleich von Werkstück-Rohteil und Nominal-Modell im 2D-Profilschnitt,
- Fig. 8:: ein aus Reverse Engineering entstandener Messdatensatz mit 2D-Profilkurven,
- Fig. 9:: Vergleich von Messdaten und Nominal-Modell im 2D-Profilschnitt,
- Fig. 10:: ein 3D-CAD-Modell nach dem erfindungsgemäßen Verfahren,
- Fig. 11:: ein 2D-Profilschnitt des 3D-CAD-Modells mit Toleranzbereich.

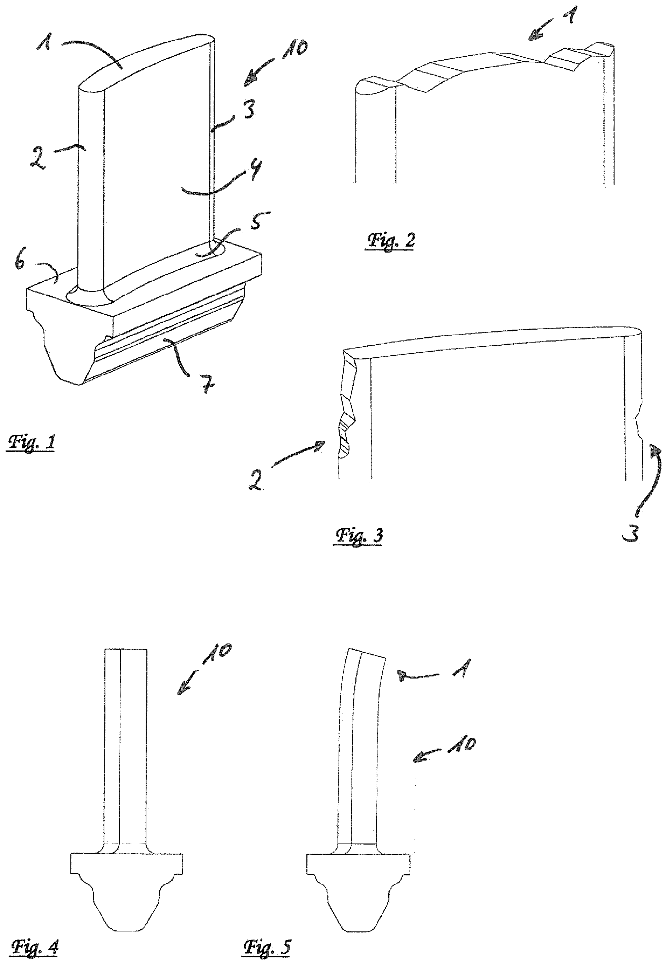

Fig. 1 zeigt in perspektivischer Ansicht eine Turbinenschaufel 10 mit einer Schaufelspitze 1, einer Profilvorderkante 2, einer Profilhinterkante 3, einer Strömungsfläche 4, einer Kehle 5, einem Kranz 6 und einem Schaufelfuß 7. Die dargestellte Turbinenschaufel 10 ist in einem unbeschädigten Ausgangszustand.

Beim Einsatz der Turbinenschaufel 10 im Betrieb kommt es aufgrund der hohen Belastungen und insbesondere auch aufgrund von Einwirkungen von Fremdkörpern zu Schäden. In Fig. 2 ist eine mit Abbrüchen beschädigte Schaufelspitze 1 dargestellt, Fig. 3 zeigt Schäden an der Profilvorderkante 2 und an der Profilhinterkante 3.

Neben Abbrüchen kann es auch zu Verkrümmungen kommen, wie sie in den Figuren 4 und 5 dargestellt ist. Fig. 4 zeigt in Seitenansicht eine ungekrümmte Turbinenschaufel 10 in Seitenansicht und Fig. 5 die Turbinenschaufel 10 mit einer während der Nutzung entstandenen Krümmung in der Schaufelspitze 1.

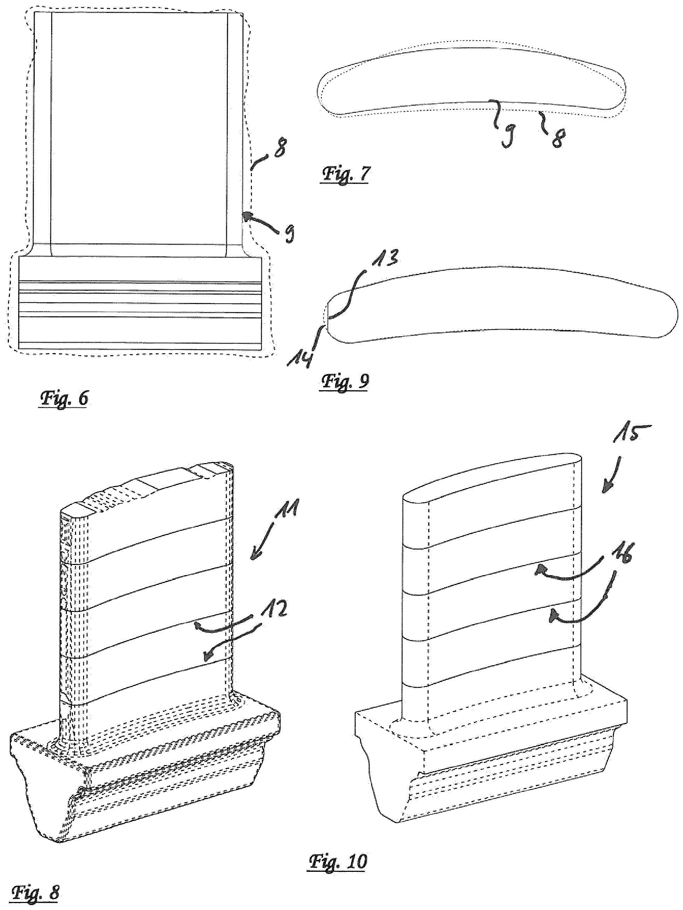

Zur Reparatur einer beschädigten Turbinenschaufel 10 wird, insbesondere im Bereich der Abbrüche, neues Material aufgetragen, z. B. durch Laser-Auftragsschweißen. Hierdurch wird ein Werkstück-Rohteil erzeugt, welches anschließend spanend bearbeitet wird. In Fig. 6 ist schematisch mit Strichelung der Umriss 8 eines solchen Werkstück-Rohteils dargestellt. Über diesen Umriss 8 ist ein Ursprungs-CAD-Modell 9 der ursprünglichen Turbinenschaufel gelegt. Dieses Ursprungs-CAD-Modell war das Nominal-Modell für die Herstellung der ursprünglichen Turbinenschaufel, die nunmehr überarbeitet werden muss. Es ist zu erkennen, dass das Rohteil zwar fast überall wie vorgesehen ein Aufmaß gegenüber dem Ursprungs-CAD-Modell 9 aufweist, jedoch wird das Ursprungs-CAD-Modell 9 nicht vollständig vom Umriss 8 des Werkstück-Rohteils eingeschlossen. Dasselbe Problem kann bei der Neufertigung einer Turbinenschaufel auftreten, nämlich wenn das durch Urformen, wie z.B. Gießen oder additive Fertigung, oder Umformen, wie z.B. Schmieden, erzeugte Werkstück-Rohteil nicht das Nominal-Modell vollständig einschließen kann.

Fig. 7 zeigt unerwünschte Abweichungen zwischen dem Umriss 8 des Werkstück-Rohteils und dem Ursprungs-CAD-Modell 9 im Profilschnitt.

Somit kann das Ursprungs-CAD-Modell 9 für die Generierung einer Werkzeugbahn zur Überarbeitung der Turbinenschaufel 10 nicht ohne weiteres eingesetzt werden.

Fig. 8 zeigt eine Messdatenkonstruktion 11 einer beschädigten Turbinenschaufel mit 2D-Profilkurven 12, die mittels einer Schnittfunktion erzeugt wurden. Die Messdatenkonstruktion entstand aus einem Messdatensatz im STL-Datenformat. Die Messdaten können dabei sowohl optisch als auch taktil von der beschädigten Turbinenschaufel, d.h. der Real-Geometrie, aufgenommen werden. Die anhand von der Real-Geometrie aufgenommenen Messdaten sind als Ausgangspunkt für die Berechnung von Werkzeugbahnen in der Regel qualitativ nicht hinreichend. So können z.B. Profilvorderkante und Profilhinterkante oftmals nur bedingt gemessen werden. Der Messdatensatz ist in diesen Bereichen dann nicht geschlossen oder es liegen Artefakte vor. Zudem werden aufgrund von Messungenauigkeiten scharfkantige Ecken abgerundet, was eine Verfälschung der Ist-Geometrie zur Folge hat. Des Weiteren ist der Umstand nachteilig, dass das STL-Format Flächen durch kleine Dreiecksflächen annähert, weshalb die CAM-Bahnberechnung polygonale Bahnen mit Unstetigkeiten anstelle von stetig gekrümmten Bahnen für die Werkzeugbewegung erzeugen würde. Dies würde bei einer Umsetzung des Messdatensatzes in eine Werkzeugbewegung zu einer Verschlechterung der gefertigten Strömungsflächen führen. Den Weg über einen STL-Messdatensatz beschreitet jedoch in der Regel das aus dem Stand der Technik bekannte "Reverse Engineering", welches aus der per Messdaten aufgenommenen Ist-Geometrie ein 3D-CAD-Modell konstruiert. Dabei wird grundsätzlich so vorgegangen, dass auf Grundlage von Messdaten und Ebenen Schnittkurven erzeugt werden, aus denen ein Schaufelprofil aufgebaut werden kann. Anschließend wird aus den 2D-Profilkurven die Strömungsfläche mit speziellen Strategien erzeugt. Anschließend werden die Strömungsflächen über die Kehle 5 mit dem Kranz 6 verbunden. Fig. 9 zeigt schematisch eine aus Messdaten erzeugte 2D-Messdatenprofilkurve 13, welche an der Profilvorderkante 2 eine Abflachung aufzeigt, die nicht durch eine Beschädigung der Turbinenschaufel sondern durch eine Messungenauigkeit erzeugt ist. Im Vergleich dazu ist gestrichelt eine Nominal-2D-Profilkurve 14 dargestellt, welche diesen Fehler nicht aufweist. Hieraus wird deutlich, dass aufgrund grundsätzlicher Schwächen der Messdatenqualität auch das Resultat des Konstruktionsprozesses stark beeinträchtigt werden kann und die Verwendung eines Messdatensatzes für die Erstellung eines 3D-CAD-Modells problematisch ist.

Aufgrund dessen wird das in Fig. 6 dargestellte Ursprungs-CAD-Modell 9 herangezogen und durch Import der gemessenen Geometrie des Werkstück-Rohteils in seiner Form derart angepasst, dass es durch den Umriss 8 des Werkstück-Rohteils vollständig umfasst wird.

Im Folgenden ist beispielhaft ein Weg der Modifikation eines Ursprungs-CAD-Modells dargestellt.

Zunächst werden aus dem Ursprungs-CAD-Modell 9 die Geometriedaten der ursprünglichen Bauteilgeometrie, das heißt die CAD-Geometriedaten des Nominalbauteils eingelesen. Dabei wird auch die funktionale Zuordnung der einzelnen Teilflächen identifiziert.

Das Werkstück-Rohteil, welches z.B. durch Urformen oder durch Materialauftrag auf ein zu reparierendes Werkstück, z.B. die Turbinenschaufel 10, entstanden ist, wird in seiner Geometrie vermessen. Die Messdaten werden eingelesen. Anschließend werden die Geometrieelemente des Ursprungs-CAD-Modells 9 auf die festgestellte Realgeometrie des Werkstück-Rohteils abgebildet. Die Messdaten der Realgeometrie können dabei in Gruppen partitioniert werden, welche jeweils einem Geometrieelement (Punkte, Kurven, Flächen) der ursprünglichen Baugeometrie des Ursprungs-CAD-Modells entsprechen.

Es wird eine Transformation erzeugt, welche Translation, Rotation, Scherung, Skalierung und/oder nichtlineare Verformungen beinhaltet und die ursprüngliche Bauteilgeometrie (Nominalgeometrie) auf alle Flächenelemente eines Rohteil-Modells abbildet, welches hinreichend genau an die erfassten Messdaten des Werkstück-Rohteils angenähert ist. Dabei werden zusätzliche Anforderungen an das gewünschte finale 3D-CAD-Modell berücksichtigt, wie etwa maximal zulässige Flächenkrümmung, Stetigkeit oder Toleranzbänder. Es kann sinnvoll sein, hierfür Hilfsgeometrien, wie z.B. Schnittkurven oder Punkteraster zu bilden

Anschließend wird die geometrische Stetigkeit in den Übergängen zwischen den transformierten Geometrieelementen geprüft. Flächenkurven, die senkrecht zu den Verbindungskanten zweier angrenzender Flächen liegen, können positionsstetig (C⁰), tangentenstetig (C¹), krümmungsstetig (C²) oder durch eine Stetigkeit von höherem Grade miteinander verbunden sein (siehe z.B. https://en.wikipedia.org/wiki/Smoothness). Im Falle einer Unstetigkeit werden die Übergänge korrigiert, so dass die Stetigkeit, wobei es sich je nach Anforderung um eine Tangenten- oder Krümmungsstetigkeit handeln kann, erzeugt wird. Nachträglich wird die Geometrie nochmals hinsichtlich der oben genannten Anforderungen an das gewünschte finale 3D-CAD-Modell geprüft.

Schließlich werden die transformierten Geometrieelemente des 3D-CAD-Modells in den Konstruktionsbaum des ursprünglichen nominalen Bauteils eingefügt. Das so entstandene modifizierte 3D-CAD Modell kann für weitere Maßnahmen, z. B. für weitere adaptive Fertigungsschritte, verwendet werden.

Die Anpassung der Geometrie erfolgt unter Weiterführung des ursprünglichen Konstruktionsbaums für das Ursprungs-CAD-Modell, welcher die einzelnen Konstruktionsschritte zu dem Ursprungs-CAD-Modell umfasst und dann auch zu dem gewünschten modifizierten 3D-CAD-Modell für die Erzeugung der Werkzeugbahn herangezogen wird. Auf diese Weise bleibt sowohl die Topologie des Flächenmodells erhalten, als auch die Datenqualität. Dies gilt insbesondere für tangentiale bzw. krümmungsstetige Übergänge, z.B. zwischen den einzelnen Flächen der Turbinenschaufel 10, da diese einen maßgeblichen Einfluss auf die Strömungseigenschaften haben. Diese Übergänge haben außerdem einen wesentlichen Einfluss auf die Qualität des NC-Programms, da schlechte Übergänge zu fehlerbehafteten Werkzeugbahnen führen und somit auch zu einer Verschlechterung der Strömungseigenschaften.

Fig. 10 zeigt schematisch eine Turbinenschaufel im modifizierten 3D-CAD-Modell 15, welches durch 2D-Profilkurven 16 ergänzt ist.

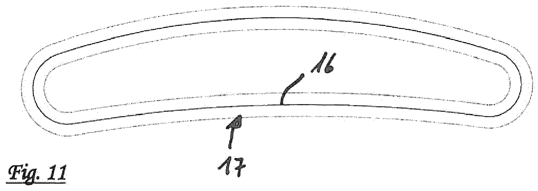

Für eine Automatisierung ist es erforderlich, algorithmisch zu entscheiden, ob eine Modifizierung eines Ursprungs-CAD-Modells 9 noch sinnvoll ist oder die erforderlichen Modifikationen nicht mehr akzeptiert werden können. Hierfür kann dem Ursprungs-CAD-Modell 9 zum Beispiel ein Toleranzbereich 17 zugeordnet werden, wie er in Fig. 11 beispielhaft an der 2D-Profilkurve 16 gezeigt ist. Die Breite des Toleranzbereichs 17 kann spezifisch den Randbedingungen angepasst werden, welche insbesondere durch die gewünschten Strömungseigenschaften und fertigungstechnische Aspekte bedingt sind und in den verschiedenen Bereichen der Turbinenschaufel 10 unterschiedlich sein können. Zur Entscheidung der weiteren Herstellbarkeit des Realbauteils können auch andere Kriterien wie die Radien der Eintritts- oder Austrittskante herangezogen werden.

Innerhalb des Toleranzbereichs werden die Daten des modifizierten 3D-CAD-Modells zum Beispiel mittels Best-Fit-Verfahren oder anderer Optimierungsverfahren positioniert und geometrisch angepasst. Bei der geometrischen Anpassung werden geometrische Randbedingungen wie minimale oder maximale Krümmungsradien oder vorgegebene Abmessungen wie zum Beispiel Sehnenlänge berücksichtigt. Zusätzlich können funktionale Randbedingungen wie Strömungseigenschaften und fertigungstechnische Aspekte berücksichtigt werden.

### Bezugszeichenliste

- 1: Schaufelspitze
- 2: Profilvorderkante
- 3: Profilhinterkante
- 4: Strömungsfläche
- 5: Kehle
- 6: Kranz
- 7: Schaufelfuß
- 8: Umriss des Werkstück-Rohteils
- 9: Ursprungs-CAD-Modell
- 10: Turbinenschaufel
- 11: Messdatenkonstruktion
- 12: 2D-Profilkurve
- 13: Messdaten-2D-Profilkurve
- 14: Nominal-2D-Profilkurve
- 15: modifiziertes 3D-CAD-Modell
- 16: 2D-Profilkurve

## Patentansprüche

1. Verfahren zur Herstellung eines 3D-CAD-Modells eines Bauteils, umfassend folgende Schritte:
a) Erfassen von Geometriedaten eines Werkstück-Rohteils (8) und
b) Modifizieren eines eine ursprüngliche Bauteilgeometrie aufweisenden Ursprungs-CAD-Modells (9) zu dem gewünschten 3D-CAD-Modell mit einer modifizierten Bauteilgeometrie, wobei zur Modifikation die Geometriedaten des Werkstück-Rohteils (8) genutzt werden.

2. Verfahren nach Anspruch 1, **dadurch gekennzeichnet, dass** jede Modifikation dokumentiert wird.

3. Verfahren nach Anspruch 1 oder 2, **dadurch gekennzeichnet, dass** das Modifizieren automatisiert mittels elektronischer Datenverarbeitung erfolgt.

4. Verfahren nach einem der vorhergehenden Ansprüche, **dadurch gekennzeichnet, dass** dem Ursprungs-CAD-Modell (9) ein Toleranzbereich zugeordnet wird, wobei das Modifizieren nur dann erfolgt, wenn das Werkstück-Rohteil (8) durch den Toleranzbereich abgedeckt oder umfasst ist.

5. Verfahren nach einem der vorhergehenden Ansprüche, **dadurch gekennzeichnet, dass** das Modifizieren mittels einer Transformation der Bauteilgeometrie des Ursprungs-CAD-Modells (9) erfolgt, wobei die Transformation Translation, Rotation, Scherung, Skalierung und/oder nichtlineare Verformung umfasst.

6. Verwendung des nach dem Verfahren nach einem der Ansprüche 1 bis 5 hergestellten 3D-CAD-Modells für eine CAM-Bearbeitung, wobei eine Werkzeugbahn auf Grundlage der erfassten Geometriedaten des Werkstück-Rohteils (8) sowie der modifizierten Bauteilgeometrie geplant wird.

7. Verwendung des nach dem Verfahren nach einem der Ansprüche 1 bis 5 hergestellten 3D-CAD-Modells für eine additive Bearbeitung.

8. Verwendung nach Anspruch 6 oder 7 für eine Bauteil-Neufertigung.

9. Verwendung nach Anspruch 6 oder 7 für die Überarbeitung eines gebrauchten Bauteils, wobei das Werkstück-Rohteil (8) das gebrauchte Bauteil ist und das die ursprüngliche Bauteilgeometrie aufweisende Ursprungs-CAD-Modell zur CAM-basierten Herstellung des ungebrauchten Bauteils diente.

10. Verwendung nach Anspruch 8 oder 9, **dadurch gekennzeichnet, dass** das Werkstück-Rohteil (8) mit einem Materialauftrag ergänzt ist.

11. Verwendung des nach dem Verfahren nach einem der Ansprüche 1 bis 5 hergestellten 3D-CAD-Modells für eine Simulation, insbesondere eine Strömungssimulation oder eine Belastungssimulation.

12. Verwendung nach einem der Ansprüche 6 bis 11, **dadurch gekennzeichnet, dass** das Bauteil ein strömungsleitendes Element ist.

13. Verwendung nach Anspruch 12, **dadurch gekennzeichnet, dass** das Bauteil Teil eines Turbinen-Laufrades oder eines Stators ist.

14. Computerprogrammprodukt, umfassend Programmcode-Mittel, geeignet zur Durchführung der Schritte eines Verfahrens nach einem der Ansprüche 1 bis 5, wenn das Computerprogrammprodukt auf einer Recheneinrichtung ausgeführt wird.

15. System zur NC-Bearbeitung mit mindestens einem NC-gesteuerten Werkzeug, **gekennzeichnet durch** eine Computerprogrammprodukt nach Anspruch 14.
